# EUROPÄISCHE PATENTSCHRIFT

(11) **EP 2 127 053 B1**
(45) Veröffentlichungstag und Bekanntmachung des Hinweises auf die Patenterteilung: **31.01.2018**
(21) Anmeldenummer: 07721985.5
(22) Anmeldetag: 28.02.2007
(51) Int. Cl.: H02H 3/00

(54) **SCHUTZGERÄT**
PROTECTIVE DEVICE
APPAREIL DE PROTECTION

(43) Veröffentlichungstag der Anmeldung: 02.12.2009
(73) Patentinhaber: Siemens Aktiengesellschaft, 80333 München (DE)
(72) Erfinder: DIELUWEIT, Jürgen, 13353 Berlin (DE); KRÜGER-GRAMATTE, Sven, 13189 Berlin (DE); MIESKE, Frank, 13053 Berlin (DE); PETERS, Jörg, 10178 Berlin (DE)
(86) Internationale Anmeldenummer: PCT/DE2007/000410
(87) Internationale Veröffentlichungsnummer: WO 2008/104140

(56) Entgegenhaltungen:
- DE-A1- 3 132 730
- US-A- 5 224 011
- US-A- 5 793 595

## Beschreibung

Die Erfindung bezieht sich auf ein Schutzgerät mit den Merkmalen gemäß dem Oberbegriff des Anspruchs 1.
Ein derartiges Schutzgerät wird von der Siemens AG unter dem Produktnamen 7UT633 vertrieben. Das vorbekannte Schutzgerät dient zum Schutz einer elektrotechnischen Anlage, insbesondere zum Schutz einer elektrischen Energieversorgungsanlage. Das Schutzgerät weist eine Mehrzahl an Messeingängen und eine Mehrzahl an Funktionsmodulen auf, die sich durch eine benutzerseitige Einstellung des Schutzgerätes mit den Messeingängen derart verbinden lassen, dass die Funktionsmodule benutzerseitig definierte Schutzfunktionen ausführen und entsprechende Steuersignale zum Ein- oder Ausschalten zugeordneter Schalter der elektrotechnischen Anlage ausgeben können.

Derartige Schutzgeräte sind auch aus US 5 793 595, US 5 224 011 und DE 31 32 730 bekannt. Ausgehend von einem Schutzgerät der beschriebenen Art liegt der Erfindung die Aufgabe zugrunde, ein Schutzgerät anzugeben, das sich noch einfacher und schneller als bisherige Schutzgeräte bedienen lässt und bei dem die Wahrscheinlichkeit von benutzerseitigen Eingabefehlern geringer ist als bei bisherigen Schutzgeräten.
Diese Aufgabe wird erfindungsgemäß durch ein Schutzgerät mit den Merkmalen gemäß Patentanspruch 1 gelöst. Vorteilhafte Ausgestaltungen der Erfindung sind in Unteransprüchen angegeben.
Danach ist erfindungsgemäß vorgesehen, dass das Schutzgerät Funktionsgruppen zur Verfügung stellt, denen im Rahmen der Geräteeinstellung jeweils ein oder mehrere Funktionsmodule zugeordnet werden können, wobei das Schutzgerät zumindest zwei unterschiedliche Funktionsgruppentypen bereitstellt, von denen zumindest ein Funktionsgruppentyp schalterspezifisch und zumindest ein Funktionsgruppentyp schutzspezifisch ist, wobei zu einer schalterspezifischen Funktionsgruppe ausschließlich schalterspezifische Funktionsmodule und zu einer schutzspezifischen Funktionsgruppe ausschließlich schutzspezifische Funktionsmodule zugeordnet werden können.
Ein wesentlicher Vorteil des erfindungsgemäßen Schutzgeräts ist darin zu sehen, dass durch das Vorgeben zweier Gruppentypen, nämlich von schalterspezifischen Funktionsgruppen bzw. "Schaltergruppen" und schutzspezifischen Funktionsgruppen bzw. Schutzgruppen" erreicht wird, dass eine einfache Eingabe einer Vielzahl häufig auftretender Anlagetopologien mit sehr wenig Eingabeschritten in das Schutzgerät möglich ist; denn die Funktion von Schutzgeräten besteht in der Regel primär darin, eingangsseitig anliegende Messwerte auf das Vorliegen von Fehlern zu untersuchen und ggf. die mit dem Schutzgerät verbundene elektrische Anlage zumindest abschnittsweise abzuschalten, wenn ein Fehler erkannt wurde. Dementsprechend wird bei der Einstellung von Schutzgeräten regelmäßig festzulegen sein, bei welchen Ereignissen das Schutzgerät auslösen soll und welche Schalter ggf. betätigt werden müssen. An dieser Stelle setzt die Erfindung an, indem alle Funktionsmodule, die sich mit der mess- und schutztechnischen Seite des Schutzgerätes befassen, nur in entsprechende Schutzgruppen eingefügt werden können, und entsprechend schalterbezogene Funktionsmodule nur Schaltergruppen, die Schaltern zugewiesen werden, zugeordnet werden können. Durch die erfindungsgemäße Vorgabe zweier Gruppentypen wird somit eine einfache, schnelle und fehlerarme Topologieeingabe der zu schützenden elektrotechnischen Anlage ermöglicht.

Um Eingabefehler zu verhindern, ist gemäß dem erfindungsgemässen Schutzgerät vorgesehen, dass Funktionsmodule, die einer schutzspezifischen Funktionsgruppe zugeordnet sind, ausgangsseitig ausschließlich mit Funktionsmodulen derselben schutzspezifischen Funktionsgruppe, mit Funktionsmodulen einer nachgeordneten Weiterverarbeitungs-Funktionsgruppe und mit Funktionsmodulen einer nachgeordneten schalterspezifischen Funktionsgruppe verbindbar sind.

Entsprechend wird es auch als vorteilhaft angesehen, wenn Funktionsmodule, die einer schalterspezifischen Funktionsgruppe zugeordnet sind, ausgangsseitig ausschließlich mit Funktionsmodulen derselben schalterspezifischen Funktionsgruppe, mit den Schaltern der durch das Schutzgerät zu schützenden elektrotechnischen Anlage, sowie mit Eingängen von schutzspezifischen Funktionsgruppen verbindbar sind.

Als eine weitere bevorzugte Ausgestaltung ist vorgesehen, dass die Funktionsmodule und die Funktionsgruppen derart ausgestaltet sind, dass eine Zuordnung zwischen den Funktionsmodulen und den Messeingängen ausschließlich mittelbar erfolgt, und zwar durch ein Zuordnen der Funktionsmodule zu einer Funktionsgruppe und ein Zuordnen der Funktionsgruppe zu den jeweiligen Messeingängen. Ein Vorteil dieser Ausgestaltung ist darin zu sehen, dass durch das Zuordnen der Funktionsmodule zu Funktionsgruppen für alle Funktionsmodule, die mit derselben Schutzaufgabe betraut sind, die Verbindung zu den zugehörigen Messeingängen nur ein einziges Mal eingegeben werden muss, indem nämlich für die zugehörige Funktionsgruppe der Funktionsmodule die entsprechenden Messeingänge definiert werden. Enthält eine Funktionsgruppe beispielsweise drei Funktionsmodule, denen dieselben Messeingänge zuzuordnen sind, so beträgt der Eingabeaufwand lediglich 33 % verglichen mit dem Eingabeaufwand, der nötig wäre, wenn - wie bei vorbekannten Schutzgeräten - für jedes Funktionsmodul separat die Messeingänge vorgegeben werden müssen. Ein weiterer Vorteil dieser Ausgestaltung besteht darin, dass durch das Zusammenführen verschiedener Funktionsmodule zu einer Funktionsgruppe die Fehlerwahrscheinlichkeit bei der Konfiguration bzw. Einstellung des Schutzgerätes gesenkt wird, weil schlicht weniger benutzerseitige Eingaben als bisher erforderlich sind. Es wird dabei automatisch stets sichergestellt, dass alle Funktionsmodule einer Funktionsgruppe mit denselben Messeingängen verbunden sind. Ein dritter Vorteil dieser Ausgestaltung besteht darin, dass durch die erzwungene Zusammenfassung von Funktionsmodulen zu Funktionsgruppen der Benutzer angehalten wird, sich bereits vor der Programmierung bzw. Einstellung des Schutzgerätes klarzumachen, wie die konkret vorliegenden Schutzaufgaben gelöst werden sollen; es wird also eine strukturierte Geräteeinstellung erzwungen. Ein vierter Vorteil dieser Ausgestaltung besteht darin, dass Funktionsgruppen, die benutzerseitig durch Zuordnen von Funktionsmodulen gebildet worden sind, in einfacher Weise mehrfach verwendet werden können, indem auf die Funktionsgruppendefinition zurückgegriffen und diese dupliziert wird.

Funktionsmodule, die zu den beschriebenen Funktionsgruppen zugeordnet werden können, können beispielsweise nach oder in Anlehnung an die Norm IEEE C37.2 ausgebildet sein; beispielhaft erwähnt seien hier folgende Funktionsmodule:
a) Schutzspezifische Funktionsmodule:
   - Funktionsmodul "Überstromzeitschutz" gemäß oder in Anlehnung an die Funktionsmodulnummer 51 der IEEE-Norm,
   - Funktionsmodul "Überspannungsschutz",
   - Funktionsmodul "Leistungsrichtungsschutz",
   - Funktionsmodul "thermischer Überlastschutz" und
   - Funktionsmodul "Schieflastschutz".
b) Schalterspezifische Funktionsmodule:
   - Funktionsmodul "Schalterversagerschutz" gemäß oder in Anlehnung an die Funktionsmodulnummer 50BF der IEEE-Norm,
   - Funktionsmodul "Wiedereinschaltungsschutz" gemäß oder in Anlehnung an die Funktionsmodulnummer 79 der IEEE-Norm,
   - Funktionsmodul "Synchronisierfunktion" gemäß oder in Anlehnung an die Funktionsmodulnummer 25 der IEEE-Norm,

Die vorstehende beispielhafte Aufzählung soll selbstverständlich nicht abschließend gemeint sein und soll nur dem besseren Verständnis dienen.

Im Rahmen einer bevorzugten Weiterbildung des Schutzgerätes ist vorgesehen, dass die Messeingänge durch Eingänge von Vorverarbeitungseinheiten gebildet sind, die eingangsseitig anliegende Spannungs- und/oder Strommessgrößen in Strom- und/oder Spannungsmesswerte vorverarbeiten und ausgangsseitig die Strom- und/oder Spannungsmesswerte an die zugeordneten Funktionsgruppen abgegeben.

Die Vorverarbeitungseinheiten weisen bevorzugt zumindest vier verschiedene Bauarten auf, nämlich eine Bauart zum strommäßigen Anschluss an ein Dreiphasensystem, eine Bauart zum spannungsmäßigen Anschluss an ein Dreiphasensystem, eine Bauart mit einem Stromeingang zur einphasigen Eingabe einer Strommessgröße und eine Bauart mit einem Spannungseingang zur einphasigen Eingabe einer Spannungsmessgröße.

Besonders bevorzugt weist das Schutzgerät eine Datenverarbeitungsanlage auf, die die Funktionsmodule softwaremäßig in Form von softwarebezogenen Funktionsmodulen und die Funktionsgruppen softwaremäßig in Form von softwarebezogenen Funktionsgruppen bereitstellt. Eine solche softwarebezogene Lösung bietet den Vorteil, dass sehr schnell Geräteveränderungen möglich sind, ohne dass unter Umständen "hardwareseitig" Anpassungen nötig sind.

Bei Einsatz einer Datenverarbeitungsanlage wird es als vorteilhaft angesehen, wenn die Datenverarbeitungsanlage derart ausgestaltet ist, dass eine Zuordnung der Funktionsmodule zu einer Funktionsgruppe und eine Zuordnung der Funktionsgruppen zu den jeweiligen Messeingängen auf eine benutzerseitige Vorgabe softwaremäßig erfolgt.

Die Erfindung wird nachfolgend anhand dreier Ausführungsbeispiele näher erläutert; dabei zeigen beispielhaft:
- Figur 1: den Hardwareaufbau eines Ausführungsbeispiel eines erfindungsgemäßen Schutzgerätes,
- Figur 2: die softwaremäßige Konfiguration des Schutzgerätes gemäß Figur 1 für den Einsatz bei einer ersten, beispielhaft gezeigten, zu schützenden elektrotechnischen Anlage,
- Figur 3: die softwaremäßige Konfiguration des Schutzgerätes gemäß Figur 1 für den Einsatz bei einer zweiten, beispielhaft gezeigten, zu schützenden elektrotechnischen Anlage,
- Figur 4: die softwaremäßige Konfiguration des Schutzgerätes gemäß Figur 1 für den Einsatz bei einer dritten, beispielhaft gezeigten, zu schützenden elektrotechnischen Anlage und
- Figur 5: die softwaremäßige Konfiguration des Schutzgerätes gemäß Figur 1 für den Einsatz bei einer vierten elektrotechnischen Anlage.

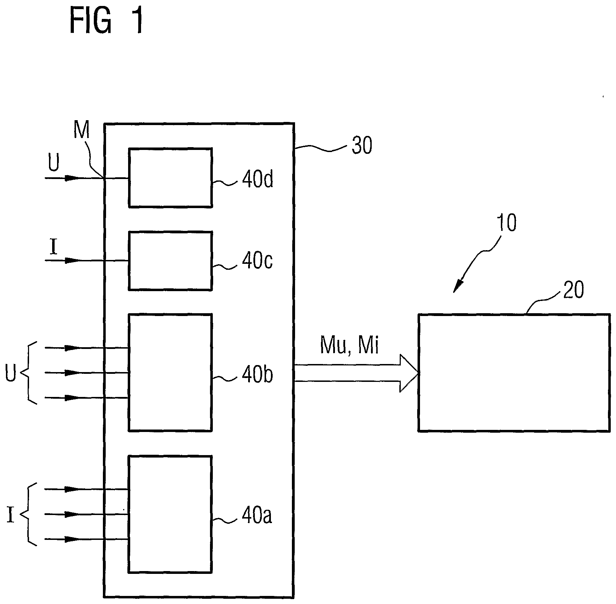

In der Figur 1 ist ein Ausführungsbeispiel für ein Schutzgerät 10 zum Schutz einer in der Figur 1 nicht weiter dargestellten elektrischen Energieversorgungsanlage gezeigt.

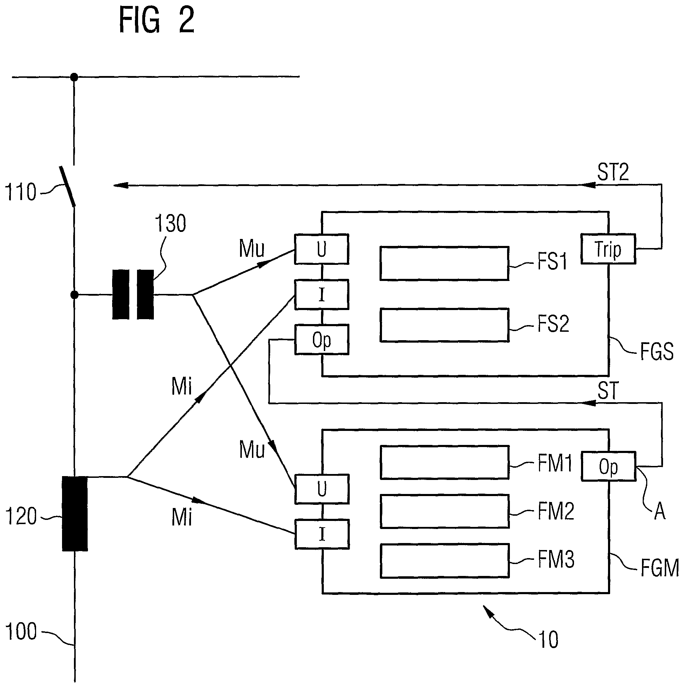

Das Schutzgerät 10 weist eine Datenverarbeitungsanlage 20 auf, die Funktionsmodule und Funktionsgruppen softwaremäßig bereitstellt. Wie die Funktionsmodule und die Funktionsgruppen aussehen können, wird im Zusammenhang mit den Figuren 2 bis 4 beispielhaft weiter unten näher erläutert.

Das Schutzgerät 10 weist außerdem eine Vorverarbeitungseinrichtung 30 auf, die eingangsseitig Messeingänge M zum elektrischen Anschluss an die elektrotechnische Anlage bereitstellt. Die Vorverarbeitungseinrichtung 30 ist beispielsweise mit einer Mehrzahl an Vorverarbeitungseinheiten 40a-40d ausgestattet, die eingangsseitig anliegende Spannungs- und/oder Strommessgrößen U und I in Strom- und/oder Spannungsmesswerte Mu und Mi vorverarbeiten und diese an die Datenverarbeitungsanlage 20 weiterleiten. Bei den vorverarbeiteten Strom- und/oder Spannungsmesswerten Mu und Mi kann es sich beispielsweise um Abtastwerte oder daraus abgeleitete Zeigermessgrößen und dergleichen handeln.

In der Figur 1 sind beispielhaft vier Vorverarbeitungseinheiten gezeigt, die unterschiedliche Bauarten aufweisen:

Die Vorverarbeitungseinheit 40a gehört zu einer ersten Bauart mit Stromeingängen, die eine dreiphasige Eingabe von Strommessgrößen I ermöglichen. Wie diese Vorverarbeitungseinheit 40a von außen beschaltet wird, also dreiphasig oder nur ein- oder zweiphasig oder zusätzlich mit dem im Sekundärkreis gebildeten Erdstrom, bleibt dem Benutzer des Schutzgerätes 10 überlassen.

Die Vorverarbeitungseinheit 40b gehört zu einer zweiten Bauart mit Spannungseingängen, die eine dreiphasige Eingabe von Spannungsmessgrößen U ermöglichen. Die Beschaltung der Vorverarbeitungseinheit 40b von außen, also dreiphasig oder nur ein- oder zweiphasig oder mit Verlagerungsspannung, bleibt ebenfalls dem Benutzer des Schutzgerätes 10 überlassen.

Die Vorverarbeitungseinheit 40c ist mit einem einzigen Stromeingang zur einphasigen Eingabe einer Strommessgröße und die Vorverarbeitungseinheit 40d mit einem einzigen Spannungseingang zur einphasigen Eingabe einer Spannungsmessgröße ausgestattet.

Wie bereits erwähnt, stellt das Schutzgerät 10 Funktionsmodule und Funktionsgruppen softwarebezogen bereit, die benutzerseitig ausgewählt und konfiguriert werden können. Dies soll nachfolgend beispielhaft anhand verschiedener Konfigurationen für verschiedene elektrotechnische Anlagen gezeigt werden. Um dabei den Einsatz und Funktion der Funktionsmodule und Funktionsgruppen zu verdeutlichen, sind in den Figuren 2 bis 4 nur die Funktionsmodule und die Funktionsgruppen sowie die jeweilige elektrotechnische Anlage gezeigt; die die Funktionsmodule und die Funktionsgruppen bereitstellende Datenverarbeitungsanlage 20 sowie die Vorverarbeitungseinrichtung 30 mit den Vorverarbeitungseinheiten 40a-40d sind der Übersichtlichkeit nicht nochmals gezeigt, zumal sie zur "Hardwareebene" des Schutzgerätes 10 gehören, und nicht - wie die Funktionsmodule und die Funktionsgruppen - zur "Softwareebene".

In der Figur 2 sieht man eine elektrische Energieversorgungsanlage 100 mit einem Schalter 110, einem Stromwandler 120 und einem Spannungswandler 130. Die Spannungs- und Strommessgrößen gelangen in Form von Strom- und Spannungsmesswerten Mu und Mi zu einer schutzspezifischen Funktionsgruppe FGM, der beispielsweise drei schutzspezifische Funktionsmodule FM1, FM2 und FM3 zugeordnet sind.

Unter schutzspezifischen Funktionsmodulen werden in diesem Zusammenhang Funktionsmodule verstanden, die am Schutzgerät eingangsseitig anliegende Spannungs- und/oder Strommessgrößen bzw. daraus abgeleitete Messwerte auswerten und Signale, beispielsweise Ausschaltsignale, erzeugen, wenn Fehler erkannt werden.

Bei dem schutzspezifischen Funktionsmodul FM1 kann es sich beispielsweise um einen "Überstromzeitschutz" gemäß Nummer 51 der Norm IEEE C37.2 handeln. Das schutzspezifische Funktionsmodul FM2 kann beispielsweise einen "Überspannungsschutz" bereitstellen und das schutzspezifische Funktionsmodul FM3 einen "Leistungsrichtungsschutz".

Da der schutzspezifischen Funktionsgruppe FGM die Messeingänge des Schutzgerätes 10 mit den Strom- und Spannungsmesswerten Mu und Mi zugeordnet worden sind, sind automatisch auch die schutzspezifischen Funktionsmodule FM1, FM2 und FM3 mit diesen Strom- und Spannungsmesswerten Mu und Mi beaufschlagt, soweit sie diese für ihren Betrieb benötigen; es ist somit benutzerseitig nur erforderlich, die Funktionsmodule FM1, FM2 und FM3 der Funktionsgruppe FGM zuzuordnen, eine Zuordnung zu den Strom- und Spannungsmesswerten Mu und Mi bzw. den zugehörigen Messeingängen M des Schutzgerätes 10 (vgl. Figur 1) ist nicht erforderlich, weil die Zuordnung zu den Strom- und Spannungsmesswerten Mu und Mi bzw. den zugehörigen Messeingängen des Schutzgerätes über die Funktionsgruppe FGM erfolgt.

In der Figur 2 erkennt man außerdem eine schalterspezifische Funktionsgruppe FGS, der beispielsweise zwei schalterspezifische Funktionsmodule FS1 und FS2 zugeordnet sind.

Unter schalterspezifischen Funktionsmodulen werden in diesem Zusammenhang Funktionsmodule verstanden, die bei Vorliegen von Fehlersignalen, insbesondere Ausschaltsignalen, vorgeordneter schutzspezifischer Funktionsmodule die dem jeweiligen schalterspezifischen Funktionsmodul zugeordneten Schalter gemäß der in dem Funktionsmodul festgelegten Weise abschalten und ggf. zu einem späteren Zeitpunkt wieder einschalten. Im Unterschied zu den schutzspezifischen Funktionsmodulen stehen die schalterspezifischen Funktionsmodule also mit den Schaltern der elektrotechnischen Anlage unmittelbar in Verbindung; die schutzspezifischen Funktionsmodule stehen mit den Schaltern nur mittelbar über die schalterspezifischen Funktionsmodule in Verbindung.

Bei dem schalterspezifischen Funktionsmodul FS1 kann es sich beispielsweise um einen "Wiedereinschaltschutz" gemäß oder in Anlehnung an die IEEE C37.2 (Funktionsmodulnummer 79) handeln. Ein solches Funktionsmodul hat die Aufgabe, nach einem Abschalten eines Leitungsabschnittes diesen wieder nach einem vorgegebenen Zeitraum einzuschalten, um zu prüfen, ob die Störung, die das Abschalten hervorgerufen hatte, zwischenzeitlich entfallen ist.

Bei dem schalterspezifischen Funktionsmodul FS2 kann es sich beispielsweise um das Funktionsmodul "Schalterversagerschutz" gemäß oder in Anlehnung an die Funktionsmodulnummer 50 der IEEE C37.2 handeln. Ein solches Funktionsmodul hat die Aufgabe, nach einem Abschaltbefehl an den Schalter 110 zu prüfen, ob der Schalter 110 wirklich geöffnet und der Strom tatsächlich abgeschaltet wurde; dies kann das Funktionsmodul FS2 beispielsweise durch Auswerten der Strommesswerte Mi feststellen.

Wie sich in der Figur 1 erkennen lässt, steht die schutzspezifische Funktionsgruppe FGM eingangsseitig nur mit den Messeingängen M des Schutzgerätes 10 in Verbindung, nicht hingegen mit Ausgängen anderer schutzspezifischer Funktionsgruppen.

Auch lässt sich in der Figur 1 erkennen, dass die schalterspezifische Funktionsgruppe FGS eingangsseitig nur mit den Messeingängen des Schutzgerätes 10 oder dem Ausgang A der schutzspezifischen Funktionsgruppe FGM in Verbindung steht und nicht mit Ausgängen anderer schalterspezifischer Funktionsgruppen.

Zwar könnte die schutzspezifische Funktionsgruppe FGM eingangsseitig auch mit einem Ausgang der schalterspezifischen Funktionsgruppe FGS verbunden sein, jedoch ist dies für die Anlagentopologie der elektrischen Energieversorgungsanlage gemäß der Figur 2 nicht erforderlich.

Die Aufgabe der schutzspezifischen Funktionsgruppe FGM bzw. der darin enthaltenen schutzspezifischen Funktionsmodule FM1, FM2 und FM3 besteht darin, die eingangsseitig anliegenden Strom- und Spannungsmesswerte Mu und Mi auszuwerten und ein Steuersignal ST zum Abschalten des Schalters 110 zu erzeugen, wenn in den Funktionsmodulen definierte Auslösekriterien erfüllt sind. Die Funktionsgruppen FGM und FGS sind hierzu miteinander über die Anschlüsse Op verbunden.

Die Aufgabe der schalterspezifischen Funktionsgruppe FGS bzw. der darin enthaltenen schalterspezifischen Funktionsmodule Fs1 und FS2 besteht darin, im Falle eines Abschaltbefehls durch das Steuersignal ST der vorgeordneten schutzspezifischen Funktionsgruppe FGM den Schalter 110 über den Steuerausgang Trip mit dem Steuersignal ST2 zu öffnen. Außerdem haben die schalterspezifische Funktionsgruppe FGS bzw. die darin enthaltenen schalterspezifischen Funktionsmodule FS1 und FS2 die Aufgabe zu prüfen, ob ein Ausschaltbefehl tatsächlich umgesetzt wurde (Funktionsmodul FS2: "Schalterversagerschutz"), sowie die Aufgabe, den Schalter 110 nach Ablauf einer vordefinierten Zeitspanne wieder einzuschalten (Funktionsmodul FS1: "Wiedereinschaltschutz").

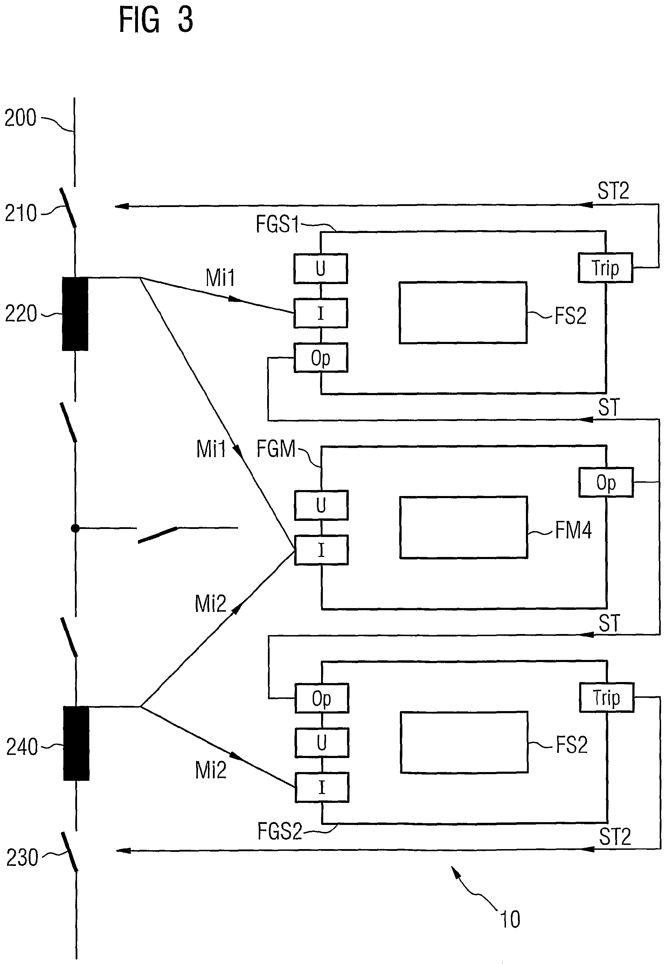

In der Figur 3 sieht man eine andere elektrische Energieversorgungsanlage 200 mit einem Schalter 210, einem Stromwandler 220, einem weiteren Schalter 230 und einem weiteren Stromwandler 240. Die Strommessgrößen gelangen in Form von Strommesswerten Mi1 und Mi2 zu einer schutzspezifischen Funktionsgruppe FGM, der beispielsweise das schutzspezifische Funktionsmodul FM4 "Überstromzeitschutz" zugeordnet ist. Der schutzspezifischen Funktionsgruppe FGM sind außerdem diejenigen Messeingänge des Schutzgerätes zugeordnet, die die Strommesswerte Mi1 und Mi2 liefern.

In der Figur 3 erkennt man außerdem zwei schalterspezifische Funktionsgruppen FGS1 und FGS2, denen beispielsweise jeweils das schalterspezifische Funktionsmodul FS2 "Schalterversagerschutz" zugeordnet ist.

Wie sich in der Figur 3 darüber hinaus erkennen lässt, steht die schutzspezifische Funktionsgruppe FGM eingangsseitig nur mit den Messeingängen des Schutzgerätes in Verbindung, nicht hingegen mit Ausgängen anderer schutzspezifischer Funktionsgruppen.

Auch lässt sich in der Figur 3 erkennen, dass die schalterspezifischen Funktionsgruppen FGS1 und FGS2 eingangsseitig nur mit den Messeingängen des Schutzgerätes und dem Ausgang A der schutzspezifischen Funktionsgruppe FGM in Verbindung stehen und beispielsweise nicht mit Ausgängen anderer schalterspezifischer Funktionsgruppen.

Die Aufgabe der schutzspezifischen Funktionsgruppe FGM bzw. des darin enthaltenen schutzspezifischen Funktionsmoduls FS4 besteht beispielsweise darin, die eingangsseitig anliegenden Strommesswerte Mi1 und Mi2 auszuwerten und ein Steuersignal ST zum Abschalten der beiden Schalter 210 und 230 zu erzeugen, wenn in dem Funktionsmodul FS4 definierte Auslösekriterien erfüllt sind. Beispielsweise wird das Steuersignal ST erzeugt, wenn die Differenz zwischen den Strommesswerten Mi1 und Mi2 eine vorgegebene Schwelle überschreitet.

Die Aufgabe der schalterspezifischen Funktionsgruppen FSG1 und FSG2 bzw. der darin enthaltenen schalterspezifischen Funktionsmodule FS2 besteht darin, im Falle eines eingangsseitig anliegenden Abschaltbefehls durch das Steuersignal ST den jeweils zugeordneten Schalter 210 bzw. 230 zu öffnen. Außerdem haben die schalterspezifischen Funktionsgruppen FGS1 und FGS2 die Aufgabe zu prüfen, ob ein Ausschaltbefehl tatsächlich umgesetzt wurde ("Schalterversagerschutz").

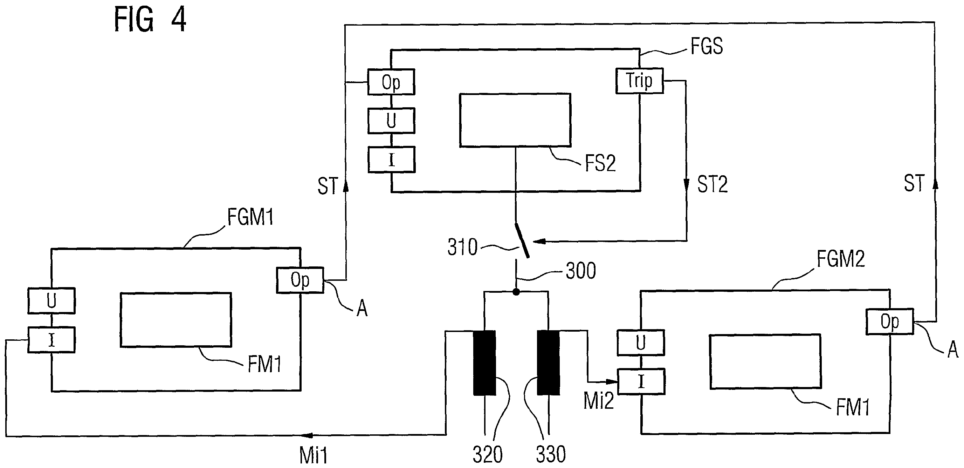

In der Figur 4 sieht man eine weitere elektrische Energieversorgungsanlage 300 mit einem Schalter 310 und zwei Stromwandlern 320 und 330. Die Strommessgrößen gelangen in Form von Strommesswerten Mi1 und Mi2 zu einer schutzspezifischen Funktionsgruppe FGM1 und einer schutzspezifischen Funktionsgruppe FGM2, die beispielsweise jeweils mit dem schutzspezifischen Funktionsmodul FM1 "Überstromzeitschutz" ausgestattet sind. Die beiden schutzspezifischen Funktionsgruppen FGM1 und FGM2 unterscheiden sich also nur darin, dass sie mit unterschiedlichen Strommesswerten Mi1 und Mi2 beaufschlagt sind.

In der Figur 4 erkennt man außerdem eine schalterspezifische Funktionsgruppe FGS, der beispielsweise das schalterspezifische Funktionsmodul FS2 "Schalterversagerschutz" zugeordnet ist.

Wie sich in der Figur 4 erkennen lässt, stehen die schutzspezifischen Funktionsgruppen FGM1 und FGM2 eingangsseitig nur mit den Messeingängen des Schutzgerätes in Verbindung, nicht hingegen mit Ausgängen anderer schutzspezifischer Funktionsgruppen. Auch lässt sich in der Figur 4 erkennen, dass die schalterspezifische Funktionsgruppe FGS eingangsseitig nur mit dem Ausgang A der schutzspezifischen Funktionsgruppen FGM1 und FGM2 in Verbindung steht und beispielsweise nicht mit Ausgängen anderer schalterspezifischer Funktionsgruppen.

Die Aufgabe der beiden schutzspezifischen Funktionsgruppen FMG1 und FMG2 bzw. die Aufgabe der beiden schutzspezifischen Funktionsmodule FM1 kann beispielsweise darin bestehen, die eingangsseitig anliegenden Strommesswerte Mi1 und Mi2 auszuwerten und das Steuersignal ST zum Abschalten des Schalters 310 zu erzeugen, wenn in dem Funktionsmodul FM1 definierte Auslösekriterien erfüllt sind. Beispielsweise wird das Steuersignal ST erzeugt, wenn die Strommesswerte Mi1 bzw. Mi2 eine vorgegebene Schwelle überschreiten.

Die Aufgabe der schalterspezifischen Funktionsgruppe FSG bzw. des darin enthaltenen schalterspezifischen Funktionsmoduls FS2 besteht darin, im Falle eines Abschaltbefehls durch das Steuersignal ST den zugeordneten Schalter 310 mit dem Steuersignal ST2 zu öffnen. Außerdem hat die schalterspezifische Funktionsgruppe FSG die Aufgabe zu prüfen, ob ein Ausschaltbefehl tatsächlich umgesetzt wurde ("Schalterversagerschutz") .

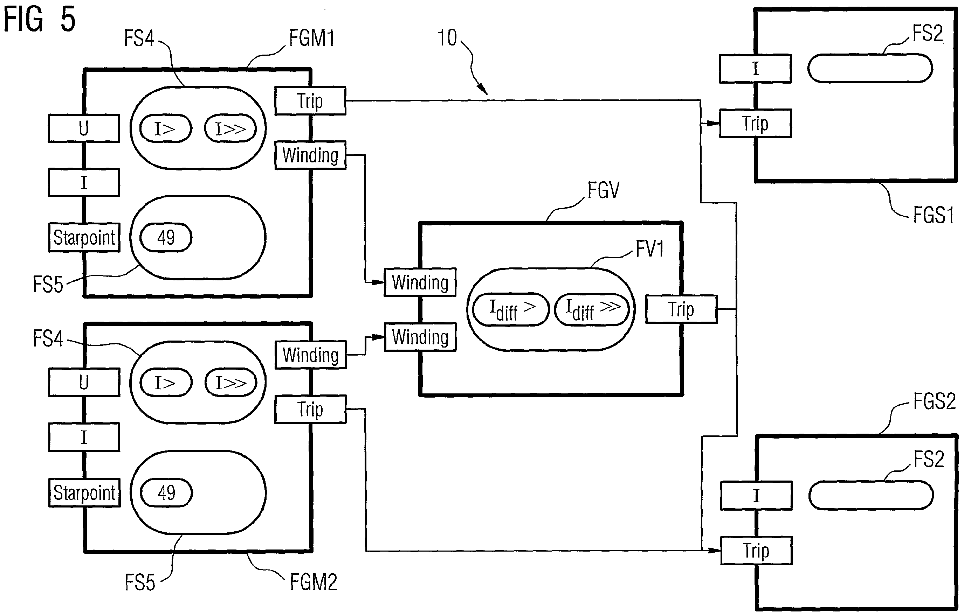

In der Figur 5 sieht man ein Ausführungsbeispiel für ein Schutzgerät 10, bei dem zwei schutzspezifische Funktionsgruppen FGM1 und FGM2 ausgewählt sind. Die eine schutzspezifische Funktionsgruppe FGM1 bezieht sich beispielsweise auf die Primärwicklungsseite eines nicht weiter dargestellten Transformators, und die andere schutzspezifische Funktionsgruppe FGM2 bezieht sich beispielsweise auf die Sekundärwicklungsseite des Transformators.

Die beiden schutzspezifischen Funktionsgruppen FGM1 und FGM2 sind beispielsweise jeweils mit den schutzspezifischen Funktionsmodulen "Überstromschutz" FS4 und "Thermischer Überlastschutz" FS5 ausgestattet.

Ausgangsseitig stehen die beiden schutzspezifischen Funktionsgruppen FGM1 und FGM2 über die Anschlüsse "Trip" mit zwei schalterspezifischen Funktionsgruppen FGS1 und FGS2 sowie über die Abschlüsse "Winding" mit einer Weiterverarbeitungs-Funktionsgruppe FGV in Verbindung.

Den beiden schalterspezifischen Funktionsgruppen FGS1 und FGS2 ist beispielsweise jeweils das schalterspezifische Funktionsmodul "Schalterversagerschutz" FS2 zugeordnet.

Die Weiterverarbeitungs-Funktionsgruppe FGV ist mit dem weiterverarbeitungs- oder schutzspezifischen Funktionsmodul FV1 ausgestattet, bei dem es sich beispielsweise um ein Differentialschutzmodul speziell für Transformatoren handeln kann. Ausgangsseitig steht die Weiterverarbeitungs-Funktionsgruppe FGV mit den beiden schalterspezifischen Funktionsgruppen FGS1 und FGS2 in Verbindung.

Die Aufgabe des weiterverarbeitungsspezifischen Funktionsmodul FV1 besteht darin, Messwerte wie beispielsweise Zeigermessgrößen und Zusatzinformationen, die von den vorgeordneten schutzspezifischen Funktionsgruppen FGM1 und FGM2 geliefert werden, auszuwerten und im Falle eines Fehlers die schalterspezifischen Funktionsgruppen FGS1 und FGS2 auszulösen. Bei den Zusatzinformationen kann es sich beispielsweise um Parameter handeln, die benutzerseitig vor- bzw. eingegeben werden, beispielsweise eine Schaltgruppenkennziffer, die Nennspannung und/oder eine Nennscheinleistung des Transformators.

## Patentansprüche

1. Schutzgerät (10) zum Schutz einer elektrotechnischen Anlage (100, 200, 300), insbesondere zum Schutz einer elektrischen Energieversorgungsanlage, wobei das Schutzgerät eine Mehrzahl an Messeingängen (M) und eine Mehrzahl an Funktionsmodulen (FM1-FM4, FS1-FS2) aufweist, die sich durch eine benutzerseitige Einstellung des Schutzgerätes mit den Messeingängen derart verbinden lassen, dass die Funktionsmodule benutzerseitig definierte Schutzfunktionen ausführen und entsprechende Steuersignale (ST, ST2) zum Ein- oder Ausschalten zugeordneter Schalter (110, 210, 230, 310) der elektrotechnischen Anlage ausgeben können, wobei
- das Schutzgerät Funktionsgruppen (FGM, FGM1, FGM2, FGS, FGS1, FGS2) zur Verfügung stellt, denen im Rahmen der Geräteeinstellung jeweils ein oder mehrere Funktionsmodule (FM1-FM4, FS1-FS2) zugeordnet werden können, wobei das Schutzgerät zumindest zwei unterschiedliche Funktionsgruppentypen bereitstellt, von denen zumindest ein Funktionsgruppentyp (FGS, FGS1, FGS2) schalterspezifisch und zumindest ein Funktionsgruppentyp (FGM, FGM1, FGM2) schutzspezifisch ist,
- **dadurch gekennzeichnet, dass** zu einer schalterspezifischen Funktionsgruppe (FGS, FGS1, FGS2) ausschließlich schalterspezifische Funktionsmodule (FS1-FS2) und zu einer schutzspezifischen Funktionsgruppe (FGM, FGM1, FGM2) ausschließlich schutzspezifische Funktionsmodule (FM1-FM4) zugeordnet werden können, wobei die schutzspezifischen Funktionsmodule (FM1-FM4) dazu eingerichtet sind, am Schutzgerät (10) eingangsseitig anliegende Spannungs- und/oder Strommessgrößen bzw. daraus abgeleitete Messwerte auszuwerten und Fehlersignale erzeugen, wenn Fehler erkannt werden, und wobei die schalterspezifischen Funktionsmodule (FS1-FS4) dazu ausgebildet sind, bei Vorliegen von Fehlersignalen vorgeordneter schutzspezifischer Funktionsmodule die dem jeweiligen schalterspezifischen Funktionsmodul (FS1-FS4) zugeordneten Schalter gemäß der in dem schalterspezifischen Funktionsmodul (FS1-FS4) festgelegten Weise abzuschalten und gegebenenfalls zu einem späteren Zeitpunkt wieder einzuschalten.

2. Schutzgerät nach Anspruch 1,
**dadurch gekennzeichnet, dass** Funktionsmodule, die einer schutzspezifischen Funktionsgruppe zugeordnet sind, ausgangsseitig ausschließlich mit Funktionsmodulen derselben schutzspezifischen Funktionsgruppe, mit Funktionsmodulen einer nachgeordneten Weiterverarbeitungs-Funktionsgruppe und mit Funktionsmodulen einer nachgeordneten schalterspezifischen Funktionsgruppe verbindbar sind.

3. Schutzgerät nach einem der voranstehenden Ansprüche,
**dadurch gekennzeichnet, dass** Funktionsmodule, die einer schalterspezifischen Funktionsgruppe zugeordnet sind, ausgangsseitig ausschließlich mit Funktionsmodulen derselben schalterspezifischen Funktionsgruppe, mit den Schaltern der durch das Schutzgerät zu schützenden elektrotechnischen Anlage, sowie mit Eingängen von schutzspezifischen Funktionsgruppen verbindbar sind.

4. Schutzgerät nach einem der voranstehenden Ansprüche,
**dadurch gekennzeichnet, dass** die Funktionsmodule und die Funktionsgruppen derart ausgestaltet sind, dass eine Zuordnung zwischen den Funktionsmodulen und den Messeingängen mittelbar erfolgt, und zwar durch ein Zuordnen der Funktionsmodule zu einer Funktionsgruppe und ein Zuordnen der Funktionsgruppe zu den jeweiligen Messeingängen.

5. Schutzgerät nach Anspruch 4,
**dadurch gekennzeichnet, dass** die Messeingänge durch Eingänge von Vorverarbeitungseinheiten (40a-40d) gebildet sind, die eingangsseitig anliegende Spannungs- und/oder Strommessgrößen (U, I) in Strom- und/oder Spannungsmesswerte (Mu, Mi) vorverarbeiten und ausgangsseitig die Strom- und/oder Spannungsmesswerte an die zugeordneten Funktionsgruppen abgegeben.

6. Schutzgerät nach Anspruch 5,
**dadurch gekennzeichnet, dass** die Vorverarbeitungseinheiten zumindest vier verschiedene Bauarten aufweisen, nämlich eine Bauart (40a) mit Stromeingängen, die eine dreiphasige Eingabe von Strommessgrößen ermöglichen, eine Bauart (40b) mit Spannungseingängen, die eine dreiphasige Eingabe von Spannungsmessgrößen ermöglichen, eine Bauart (40c) mit einem Stromeingang zur einphasigen Eingabe einer Strommessgröße und eine Bauart (40d) mit einem Spannungseingang zur einphasigen Eingabe einer Spannungsmessgröße.

7. Schutzgerät nach einem der voranstehenden Ansprüche,
**dadurch gekennzeichnet, dass** das Schutzgerät eine Datenverarbeitungsanlage (20) aufweist, die die Funktionsmodule softwaremäßig in Form von softwarebezogenen Funktionsmodulen und die Funktionsgruppen softwaremäßig in Form von softwarebezogenen Funktionsgruppen bereitstellt.

8. Schutzgerät nach Anspruch 7,
**dadurch gekennzeichnet, dass** die Datenverarbeitungsanlage derart ausgestaltet ist, dass eine Zuordnung der Funktionsmodule zu einer Funktionsgruppe und eine Zuordnung der Funktionsgruppen zu den jeweiligen Messeingängen auf eine benutzerseitige Vorgabe softwaremäßig erfolgt.

## Claims

1. Protective device (10) for protecting an electrotechnical system (100, 200, 300), in particular for protecting an electrical energy supply system, wherein the protective device comprises a plurality of measurement inputs (M) and a plurality of function modules (FM1-FM4, FS1-FS2), which can be connected to the measurement inputs by means of a setting of the protective device on the part of the user in such a way that the function modules implement protection functions defined on the part of the user and can output corresponding control signals (ST, ST2) for switching on or off assigned switches (110, 210, 230, 310) of the electrotechnical system, wherein
- the protective device makes available function groups (FGM, FGM1, FGM2, FGS, FGS1, FGS2), to which in each case one or a plurality of function modules (FM1-FM4, FS1-FS2) can be assigned in the context of the setting of the device, wherein the protective device provides at least two different function group types, of which at least one function group type (FGS, FGS1, FGS2) is switch-specific and at least one function group type (FGM, FGM1, FGM2) is protection-specific, **characterized in that**
- exclusively switch-specific function modules (FS1-FS2) can be assigned to a switch-specific function group (FGS, FGS1, FGS2) and exclusively protection-specific function modules (FM1-FM4) can be assigned to a protection-specific function group (FGM, FGM1, FGM2), wherein the protection-specific function modules (FM1-FM4) are configured to evaluate voltage and/or current measurement variables present at the protective device (10) on the input side, or measurement values derived therefrom, and generate error signals if errors are identified, and wherein the switch-specific function modules (FS1-FS4) are configured, given the presence of error signals of upstream protection-specific function modules, to switch off the switches assigned to the respective switch-specific function module (FS1-FS4) in accordance with the manner defined in the switch-specific function module (FS1-FS4) and, if appropriate, to switch on said switches again at a later point in time.

2. Protective device according to Claim 1,
**characterized in that**
function modules which are assigned to a protection-specific function group are connectable on the output side exclusively to function modules of the same protection-specific function group, to function modules of a downstream further processing function group and to function modules of a downstream switch-specific function group.

3. Protective device according to either of the preceding claims,
**characterized in that**
function modules which are assigned to a switch-specific function group are connectable on the output side exclusively to function modules of the same switch-specific function group, to the switches of the electrotechnical system to be protected by the protective device, and to inputs of protection-specific function groups.

4. Protective device according to any of the preceding claims,
**characterized in that**
the function modules and the function groups are configured in such a way that an assignment between the function modules and the measurement inputs is effected indirectly, specifically by an assignment of the function modules to a function group and an assignment of the function group to the respective measurement inputs.

5. Protective device according to Claim 4,
**characterized in that**
the measurement inputs are formed by inputs of preprocessing units (40a-40d), which preprocess voltage and/or current measurement variables (U, I) present on the input side into current and/or voltage measurement values (Mu, Mi) and, on the output side, output the current and/or voltage measurement values to the assigned function groups.

6. Protective device according to Claim 5,
**characterized in that**
the preprocessing units have at least four different designs, namely a design (40a) comprising current inputs which enable a three-phase input of current measurement variables, a design (40b) comprising voltage inputs which enable a three-phase input of voltage measurement variables, a design (40c) comprising a current input for the single-phase input of a current measurement variable and a design (40d) comprising a voltage input for the single-phase input of a voltage measurement variable.

7. Protective device according to any of the preceding claims,
**characterized in that**
the protective device comprises a data processing system (20), which provides the function modules in terms of software in the form of software-related function modules and provides the function groups in terms of software in the form of software-related function groups.

8. Protective device according to Claim 7,
**characterized in that**
the data processing system is configured in such a way that an assignment of the function modules to a function group and an assignment of the function groups to the respective measurement inputs are carried out in terms of software in response to a stipulation on the part of the user.

## Revendications

1. Appareil (10) de protection pour protéger une installation (100, 200, 300) électrotechnique, notamment pour protéger une installation d'alimentation en énergie électrique, l'appareil de protection ayant une pluralité d'entrées (M) de mesure et une pluralité de modules (FM1 à FM4, FS1 à FS2) fonctionnels, qui peuvent, par un réglage, du côté de l'utilisateur, de l'appareil de protection, être reliés aux entrées de mesure, de manière à ce que les modules fonctionnels puissent exécuter des fonctions de protection définies du côté de l'utilisateur et émettre des signaux (ST, ST2) de commande correspondants, de fermeture ou d'ouverture d'interrupteurs (110, 210, 230, 310) associés de l'installation électrotechnique,
dans lequel
- l'appareil de protection met à disposition des groupes (FGM, FGM1, FGM2, FGS, FGS1, FGS2) fonctionnels auxquels peuvent être affectés, dans le cadre du réglage de l'appareil, respectivement un ou plusieurs modules (FM1 à FM4, FS1 à FS2) fonctionnels, l'appareil de protection mettant à disposition au moins deux types différents de groupes fonctionnels, dont au moins un type (FGS, FGS1, FGS2) de groupes fonctionnels est spécifique à un interrupteur et au moins un type (FGM, FGM1, FGM2) de groupes fonctionnels est spécifique à la protection,
- **caractérisé en ce que**
à un groupe (FGS, FGS1, FGS2) fonctionnel spécifique à un interrupteur, peuvent être affectés exclusivement des modules (FS1 à FS2) fonctionnels spécifiques à un interrupteur, et à un groupe (FGM, FGM1, FGM2) fonctionnel spécifique à la protection, peuvent être affectés exclusivement des modules (FM1 à FM4) fonctionnels spécifiques à la protection, les modules (FM1 à FM4) fonctionnels spécifiques à la protection étant conçus pour exploiter des grandeurs de tension et/ou de courant, s'appliquant du côté de l'entrée à l'appareil (10) de protection et des valeurs de mesure qui s'en déduisent, et pour produire des signaux de défaillance lorsque des défaillance sont détectées et dans lequel les modules (FS1 à FS4) fonctionnels spécifiques à l'interrupteur sont constitués pour, en présence de signaux de défaillance de modules fonctionnels spécifiques à la protection montés en amont, ouvrir, de la façon fixée suivant le module (FS1 à FS4) fonctionnel spécifique à un interrupteur, les interrupteurs affectés au module (FS1 à FS4) fonctionnel spécifique à un interrupteur respectif et, le cas échéant, les refermer à un instant ultérieur.

2. Appareil de protection suivant la revendication 1,
**caractérisé en ce que**
des modules fonctionnels, qui sont associés à un groupe fonctionnel spécifique à la protection, peuvent être reliés, du côté de la sortie, exclusivement à des modules fonctionnels du même groupe fonctionnel spécifique à la protection, à des modules fonctionnels d'un groupe fonctionnel de retraitement en aval et à des modules fonctionnels d'un groupe fonctionnel spécifique à un interrupteur en aval.

3. Appareil de protection suivant l'une des revendications précédentes,
**caractérisé en ce que**
des modules fonctionnels, qui sont affectés à un groupe fonctionnel spécifique à un interrupteur, peuvent être reliés, du côté de la sortie, exclusivement à des modules fonctionnels du même groupe fonctionnel spécifique à un interrupteur, aux interrupteurs de l'installation électrotechnique, protégés par l'appareil de protection, ainsi qu'à des entrées de groupes fonctionnels spécifiques à la protection.

4. Appareil de protection suivant l'une des revendications précédentes,
**caractérisé en ce que**
les modules fonctionnels et les groupes fonctionnels sont conformés de manière à produire une affectation entre les modules fonctionnels et les entrées de mesure, et cela par une affectation des modules fonctionnels à un groupe fonctionnel et par une affectation des groupes fonctionnels aux entrées de mesure respectives.

5. Appareil de protection suivant la revendication 4,
**caractérisé en ce que**
les entrées de mesure sont formées par des entrées d'unités (40a à 40d) de prétraitement, qui transforment des grandeurs (U, I) de tension et/ou de courant, s'appliquant du côté de l'entrée, en des valeurs (Mu, Mi) de mesure de courant et/ou de tension et envoient les valeurs de mesure de courant et/ou de tension, du côté de la sortie, aux groupes fonctionnels associés.

6. Appareil de protection suivant la revendication 5,
**caractérisé en ce que**
les unités de prétraitement ont au moins quatre types de construction différents, à savoir un type (40a) de construction, ayant des entrées de courant, qui rendent possible une entrée triphasée de grandeurs de mesure de courant, un type (40b) de construction, ayant des entrées de tension, qui rendent possible une entrée triphasée de grandeurs de mesure de tension, un type (40c) de construction, ayant une entrée de courant pour l'entrée monophasée d'une grandeur de mesure de courant, et un type (40d) de construction, ayant une entrée de tension pour l'entrée monophasée d'une grandeur de mesure de tension.

7. Appareil de protection suivant l'une des revendications précédentes,
**caractérisé en ce que**
l'appareil de protection a un système (20) de traitement de données, qui met à disposition les modules fonctionnels en logiciel sous la forme de modules fonctionnels se rapportant à du logiciel et les groupes fonctionnels en logiciel, sous la forme de groupes fonctionnels rapportés au logiciel.

8. Appareil de protection suivant la revendication 7,
**caractérisé en ce que**
le système de traitement de données est conformé de manière à effectuer, en logiciel sur une prescription du côté de l'utilisateur, une affectation des modules fonctionnels à un groupe fonctionnel et une affectation des groupes fonctionnels aux entrées de mesure respectives.
